# EUROPEAN PATENT SPECIFICATION

(11) **EP 2 731 423 B1**
(45) Date of publication and mention of the grant of the patent: **13.01.2016**
(21) Application number: 12737588.9
(22) Date of filing: 12.07.2012
(51) Int. Cl.: A01K 83/00, A01K 85/02, A01K 91/18

(54) **HOOK POD**
HAKENKAPSEL
CAPSULE DE PROTECTION POUR HAMEÇON

(30) Priority: 12.07.2011 GB 201111909
(43) Date of publication of application: 21.05.2014
(73) Proprietor: Fishtek Ltd., Moretonhampstead, Devon TQ13 8NA (GB)
(72) Inventor: KIBEL, Peter, Harbertonford Devon TQ9 6TG (GB); KIBEL, Ben, Bovey Tracey Devon TQ13 9PS (GB)
(74) Representative: Emerson, Peter James
(86) International application number: PCT/GB2012/051647
(87) International publication number: WO 2013/008015

(56) References cited:
- WO-A1-2006/066360
- GB-A- 2 335 584
- US-A- 4 023 300
- US-A- 5 131 183

## Description

This invention relates to a "hook pod" for attachment to a longline and for releasably retaining a hook. The invention is of particular relevance for use with pelagic longlines.

### Background

A widely-used technique for catching sea fish is the use of longlines. Longlines are, as the name suggests, long fishing lines which include a number of baited hooks attached along their length via respective branch lines or "snoods". They are deployed from a boat, and set to sink to the required depth. Pelagic longlines for example are set near the sea surface, and are commonly used to catch fish such as swordfish, tuna etc.

A well-known problem with the use of longlines is the effect they can have on other species, particularly sea birds such as albatross, which are attracted to the baited hooks. The birds may be caught when the lines are set from the stern of the boat and still proximate the sea surface, i.e. while the lines are sinking to the required depth.

Various techniques have been employed to prevent damage to sea birds, for example using weights to reduce the time at which the line is close to the surface or setting lines during periods of relatively low light etc.

The problem has also been addressed in US2008/0307690 and WO2006/066360 for example. These documents make use of water-degradable "ingestion barriers" to prevent sea birds becoming ensnared on the hooks. The barriers eventually degrade once the hooks have been in the water for a certain period, by which point hopefully the hooks have sunk out of reach of birds. A problem remains that it is difficult to accurately predict when the barrier will degrade in differing sea conditions.

As further prior art there may be mentioned US5131183 and US4023300, each of which disclose hook pods having the pre-characterising features of claim 1.

None of these techniques is entirely failsafe, and so a reliable and reproducible method of preventing harm to birds is required.

### Summary of the invention

It is an aim of the present invention to address this problem, and provide a mechanism for safely setting longlines.

This aim is achieved by providing a "hook pod" for attachment to a hook, which includes a barrier to prevent birds being caught, and means for reliably releasing the barrier at the intended depth. If the lines sink quickly and the hook is protected, the birds do not have time to pick up the baits, before the hooks are too deep.

A further aim of the invention is to provide a means for easily connecting a hook to a hook pod. This aim is achieved by the use of retaining means which enable quick connection of the hook, but prevent its release.

In accordance with a first aspect of the present invention there is provided a hook pod for attachment to a longline and for releasably retaining a hook, comprising a body and a cover, the body and the cover being relatively movable from a closed configuration to an open configuration, such that in the closed configuration the body and cover are relatively positioned to form a cavity therebetween, the cavity dimensioned to retain a portion of a hook therein in use, preventing access to the hook portion, and in the open configuration the body and cover are relatively positioned such that the hook is released from the cavity, the hook pod comprising locking means for releasably locking the body and the cover in the closed configuration,
characterised in that the hook pod further comprises
release means for releasing the locking means when the ambient pressure external to the pod reaches a predetermined limit, thus enabling the body and cover to move to the open configuration.

The locking means may comprise a locking member mounted on the body, the locking member comprising means for engaging with the cover for locking the body and the cover in the closed configuration. In this case, the body may comprise a piston, the piston being relatively movable with respect to the body, and the member being connected to the piston. In this case, the body may further comprise resilient means, the resilient means acting to bias the piston into a closed position, in which the member engages with the cover. In this arrangement, the resilient means may be arranged such that when the piston is caused to move against the bias, the member disengages with the cover.

In the closed configuration, the piston, the body and the cover may define a substantially waterproof chamber within the hook pod. To effect this, the arrangement may be such that the body comprises a cylindrical barrel which houses the piston, the piston sealingly engages the internal perimeter of the barrel, and the cover comprises means for sealingly engaging an end of the barrel when in the closed configuration, such that the chamber is defined by the piston, the inner surface of the barrel and the sealing engaging means of the cover.

The body may optionally comprise a diaphragm, the diaphragm being relatively movable with respect to the body, and the member being connected to the diaphragm. In this case, the diaphragm may be biased into an engaging position, the arrangement being such that when the diaphragm is caused to move against the bias, the member disengages with the cover.

Optionally, the cover comprises a bellows, the bellows being relatively movable with respect to the cover, and the member being connected to the bellows. In this case, the bellows may be biased into an engaging position, the arrangement being such that when the bellows is caused to move against the bias, the member disengages with the cover.

Preferably, the body and cover are pivotally connected.

The hook pod may comprise a light outputting means and a power source for said light outputting means. In this case, the light outputting means may be activated when the body and cover move to the open configuration.

Optionally, the pod comprises means for retaining the hook portion within the cavity when the body and cover are in the closed configuration. In this case, the retaining means may comprise a pivotally mounted door movable between a closed position in which the hook portion cannot enter or leave the cavity, and an open position in which the hook portion can enter the cavity. The door may be mounted to the body or the cover, and may be resiliently biased to the closed position. In the case where the door is mounted to the cover, a further door may be pivotally mounted to the body.

The hook portion may comprise a barb.

### Detailed description

The invention will now be described with reference to the accompanying drawings, in which:
Fig. 1 schematically shows a perspective view of a hook pod in accordance with an embodiment of the present invention in a closed configuration;
Fig. 2 schematically shows a perspective view of the hook pod of Fig. 1 in an open configuration;
Fig. 3 schematically shows a cross-section view of the hook pod of Fig. 1, in a closed configuration;
Fig. 4 schematically shows a cross-section view of the hook pod of Fig. 1, in a closed configuration;
Fig. 5 schematically shows a cross-section view of the hook pod of Fig. 1, in a closed configuration;
Fig. 6 schematically shows a cross-section view of the hook pod of Fig. 1, in a closed configuration;
Fig. 7 schematically shows a cross-section view of the hook pod of Fig. 1, in an open configuration;
Fig. 8 schematically shows a cross-section view of the hook pod of Fig. 1;
Fig. 9 schematically shows a cross-section view of a hook pod, in accordance with a second embodiment of the invention; and
Fig. 10 schematically shows a cross-section view of a hook pod, in accordance with a third embodiment of the present invention.

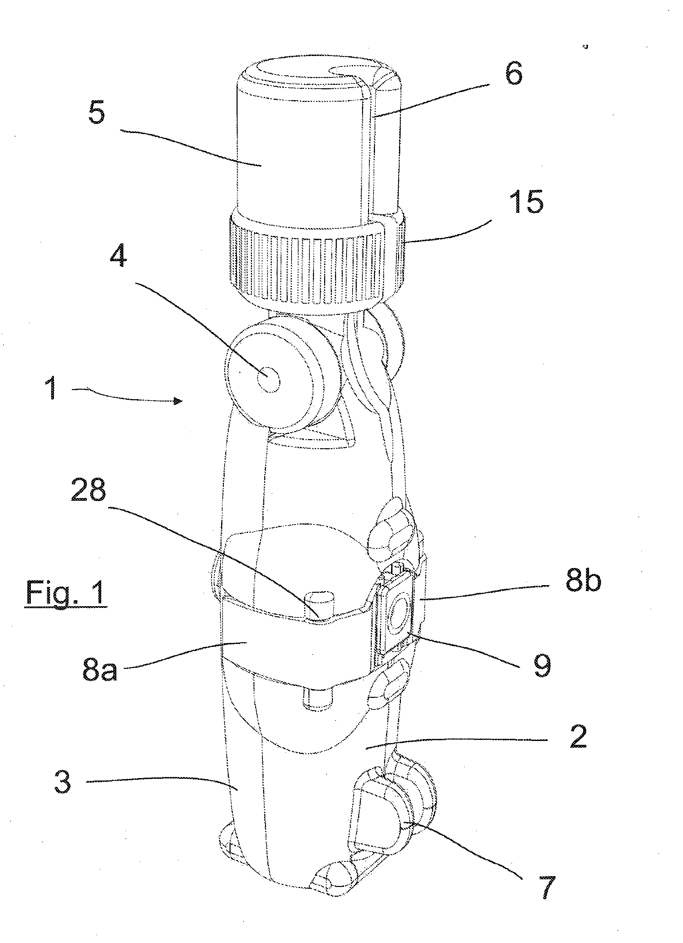

A perspective view of a hook pod 1 in accordance with a first embodiment of the invention is schematically shown in Fig. 1, in a closed configuration. The hook pod 1 includes two major components, a body 2 and a cover 3, which are connected together at a pivot point 4. Body 2 and cover 3 are constructed from rigid material, for example a plastics material, which is preferably unaffected by seawater and strong enough to withstand ambient pressures at the required depth of use. Advantageously, the body 2 and cover 3 are transparent, to allow light to pass therethrough. A weight 5 is provided at the upper end of body 2 as shown, for sinking the pod to the desired depth of water in use. A line guidance slot 6 is formed in the weight 5. A locking collar 15 is rotatably mounted around the weight 5 to trap the snood line within the slot 6, as will be described further below. An additional line guidance means 7 is provided at the distal end of body 2.

To keep body 2 and cover 3 in the closed configuration shown, a locking means is provided, comprising first and second locking members 8a and 8b. These are both pivotally mounted on body 2 at pivot points 28, with a first end connected to a piston 9 located within the body 2, and partially wrap around the circumference of body 2. The distal ends of locking members 8a, 8b engage with cover 3 in a "snap-fit" manner, acting to keep the body 2 and cover 3 in the closed configuration shown.

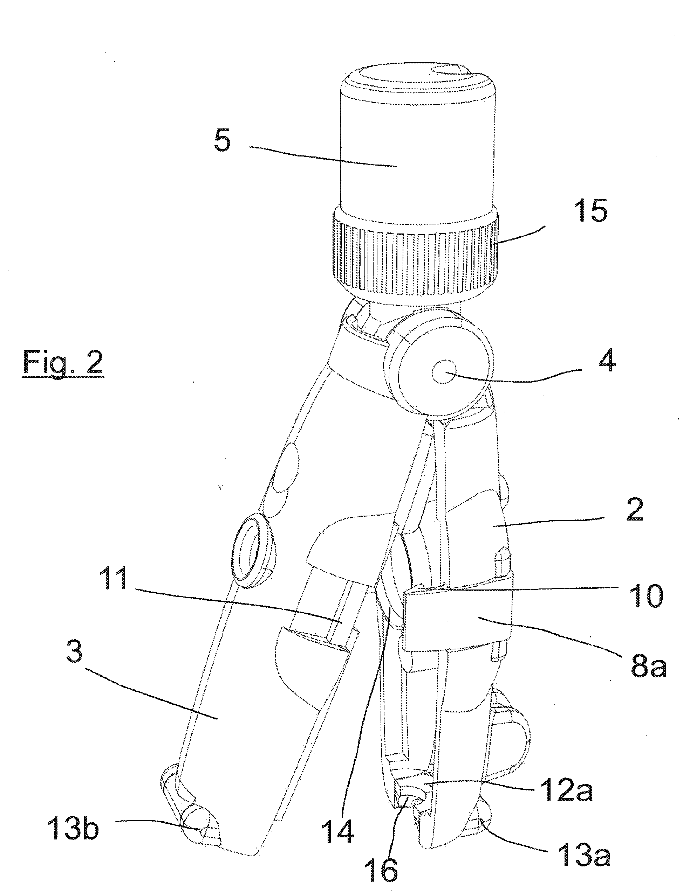

Fig. 2 schematically shows a perspective view, from a slightly different angle, of the hook pod of Fig. 1 in an open configuration. It can be seen that in the open configuration shown, the body 2 and cover 3 are separated, such that a portion of a hook, for example a barb, may pass out of the hook pod 1. Here it is possible to see an engagement protrusion on locking member 8a, which in the closed configuration engages with and abuts against a mating protrusion 11 on cover 3. In this figure, it is also possible to see part of the retaining means by which the hook portion is retained in the hook pod in use, this comprises a door 12a pivotally mounted to body 2 at pivot 13a. Door 12a includes a generally semicircular concavity 16 at its distal edge, which is dimensioned so as to receive the body of a hook. A similar door 12b (not visible in Fig. 2) is mounted via pivot 13b to cover 3. These will be described in more detail below. Additionally, a cylindrical barrel 14 can be seen formed on the inner surface of body 2. Piston 9 is housed within barrel 14 for sliding movement along the axis of the barrel.

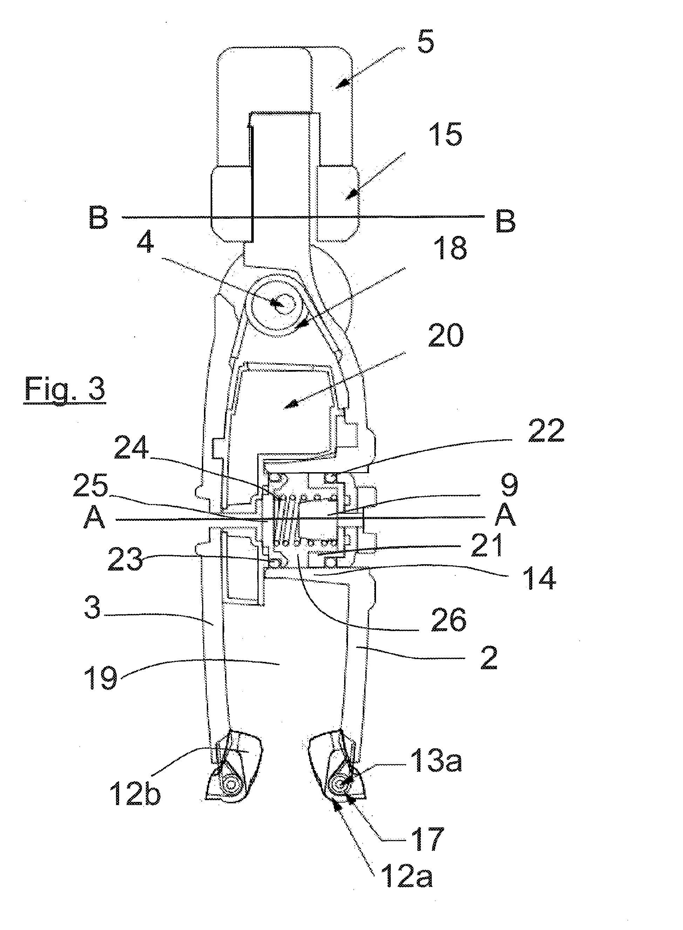

Fig. 3 schematically shows a cross-sectional view of the hook pod of Fig. 1, while in the closed configuration. Each door is biased into a closed position by a resilient spring 17, however here, doors 12a and 12b are shown in an open position. In use, a when initially loading the hook portion (not shown) into the hook pod, the hook portion would be placed against the doors 12a, 12b and pushed into cavity 19 formed between the body 2 and cover 3. As the portion is pushed, doors 12a, 12b are forced open, against the resistance of springs 17. When the portion has entered cavity 19 correctly, the pushing force is stopped, and doors 12a, 12b are forced back to the closed position, locking the portion within the cavity 19. In other words, each door 12a, 12b is movable between a closed position in which the portion cannot enter or leave the cavity, and an open position in which the portion can enter the cavity.

A resilient spring 18 is provided proximate the pivot 4. This acts to bias the body 2 and cover 3 apart, as will be described further below.

A light is generally shown at 20, housed within the body 2. This light includes a power source and light output source, for example a light-emitting diode or the like. The light 20 is activated when the pod opens, to act as an attractor for the target fish. In Fig. 3, it can also be seen that piston 9 includes a flange 21 which carries an O-ring seal 22. This sealing engagement of the piston 9 and inner perimeter of barrel 14 serves to make the connection between piston 9 and the inner perimeter of barrel 14 substantially waterproof. At the other end of the barrel 14, the cover 3 is provided with means for sealingly engaging, in a substantially waterproof manner, the end of the barrel when in the closed configuration, comprising a flange 25 and O-ring seal 23. In this way, a chamber 26 is defined by the piston 9, the inner surface of the barrel 14, and the sealing engaging means 25 of the cover 3. A resilient spring 24 is located within chamber 26, which acts to bias the piston 9 outwards, i.e. away from cover 3. In use, the chamber 26 will initially be air-filled.

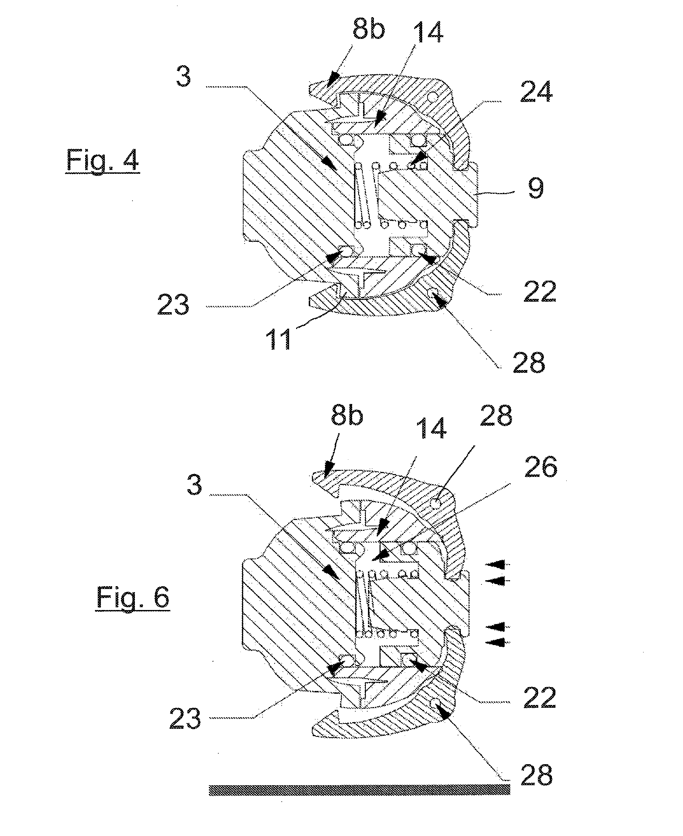

Fig. 4 schematically shows a sectional view of the hook pod 1 taken along the line A-A of Fig. 3. The locking members 8a, 8b can be seen each having a first end connected to piston 9, with a distal end engaging with protrusion 11, and pivotally mounted via pivot points 28.

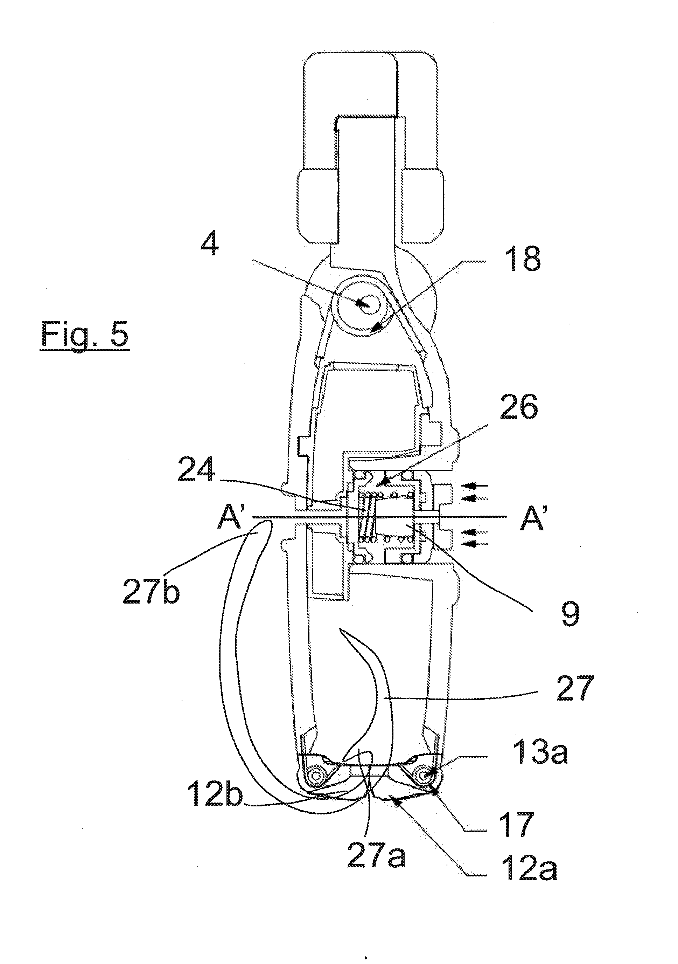

Fig. 5 schematically shows a cross-section view of the hook pod of Fig. 1, in a closed configuration, when placed in water, and with a hook portion 27 inserted. Hook portion 27 includes a barb 27a located below the hook point. At the other end of the hook, positioned to remain external to the cavity 19, is an attachment point 27b for attachment to a line (not shown), as is known in the art. The hook 27 has been inserted through doors 12a, 12b into cavity 19, and the doors 12a, 12b have been returned to their closed positions by springs 17, preventing the hook portion 27 from escaping. With this form of hook, the barb 27a itself acts to prevent the hook portion 27 escaping from the cavity, the dimensions of the barb 27a being such that it cannot pass through the closed doors 12a, 12b.

As the depth of the hook pod increases, the ambient water pressure surrounding the pod also correspondingly increases. Since the ambient water pressure will generally be much greater than the air pressure within chamber 26, piston 9 will receive a net force pushing it against the biasing force of the spring 24. Therefore, as the ambient pressure increases, the piston will move to the left as shown in Fig. 5.

Fig. 6 schematically shows a sectional view of the hook pod 1 taken along the line A'-A' of Fig. 5. Here, inward movement of piston 9 causes locking members 8a, 8b to pivot about pivot points 28, which in turn causes their distal ends to disengage with protrusions 11, so that the hook pod 1 may move into the open configuration.

Advantageously, the size of chamber 26, piston 9 and strength of the spring 24 are chosen so that the locking members 8a, 8b disengage at an ambient pressure corresponding to the required water depth.

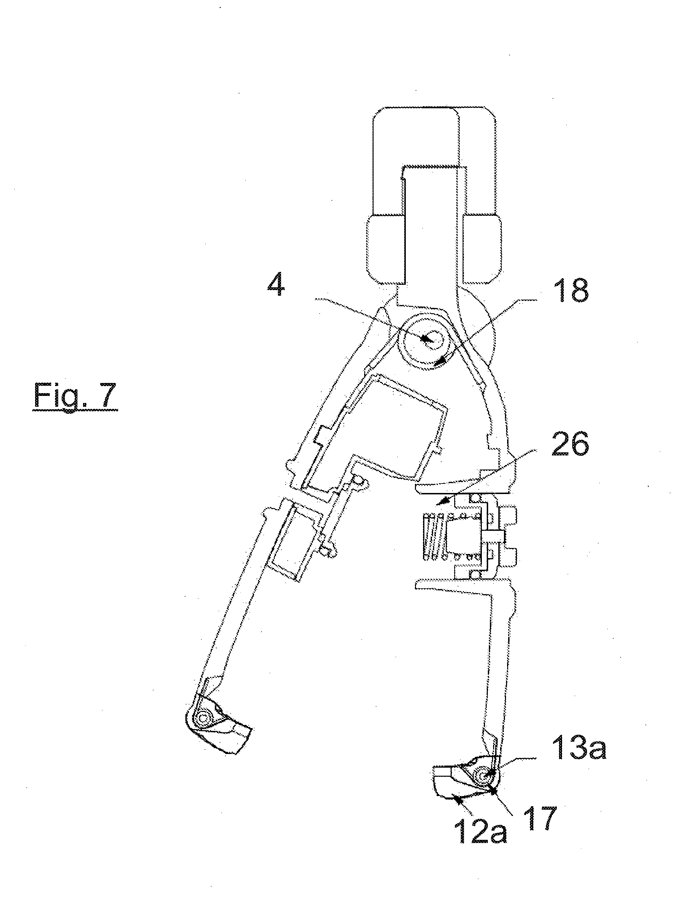

Fig. 7 schematically shows a cross-section view of the hook pod of Fig. 1, in an open configuration, following disengagement of locking members 8a, 8b due to movement of piston 9. Spring 18 acts to force body 2 and cover 3 apart. This widens the gap between doors 12a and 12b, so that the hook may escape from cavity 19. Chamber 26 is also opened, so that water may enter, equalising the internal and external pressures. Additionally, movement of hook pod 1 into the open configuration causes light 20 to activate.

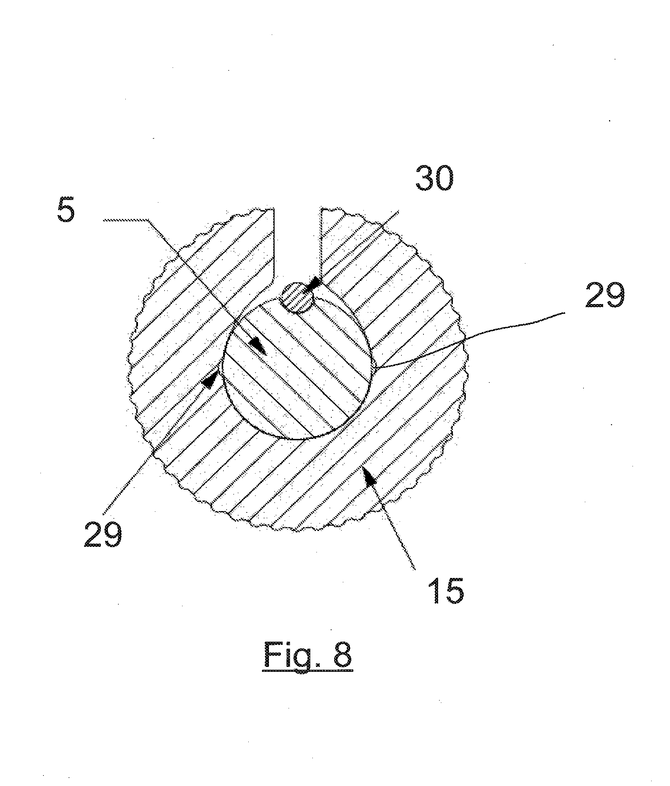

Fig. 8 schematically shows a cross-section view of the hook pod of Fig. 1, taken along the line B-B of Fig. 3, showing the line attachment mechanism in more detail, together with a line 30. Locking collar 15 is rotatably mounted about weight 5, and includes indentations 29 on its inner surface. Weight 5 has a slot 6 shaped to receive a line 30. In use, a line 30 is inserted into the slot 6 of the weight 5, with the locking collar 15 in the azimuthal position shown in Fig. 8. Once line 30 is correctly positioned, locking collar 15 may be rotated in either direction, until an indentation 29 engages with the line 30. The line 30 is no held securely between weight 6 and locking collar 15.

In use, the hook portion 27 pushed through the closed doors 12a, 12b of the hook pod 1 in one quick action so that the hook is locked in place, and cannot be accessed by sea birds. The hook pod 1 is fixed to the line typically about two to three metres above the hook using the locking collar as described above, so that a loop is formed. When cast, the hook pod 1 sinks to a depth of about ten to fifteen metres, at which point the ambient water pressure is sufficient to move piston 9 to disengage locking members 8a, 8b. This causes the body 2 and cover 3 to spring open, releasing the hook. Light 20 is also activated at this point.

When the line is eventually hauled, the hook pod remains attached to the line. For re-use, the hook pod may simply be pushed shut into the closed configuration (having checked that chamber 26 is substantially free of water), and a hook reinserted into cavity 19 through doors 12a, 12b.

The above-described embodiments are exemplary only, and other possibilities and alternatives within the scope of the invention will be apparent to those skilled in the art. For example, while with the embodiment described in detail above the body 2 carries the piston and locking members, these components may equally well be carried by the cover 3.

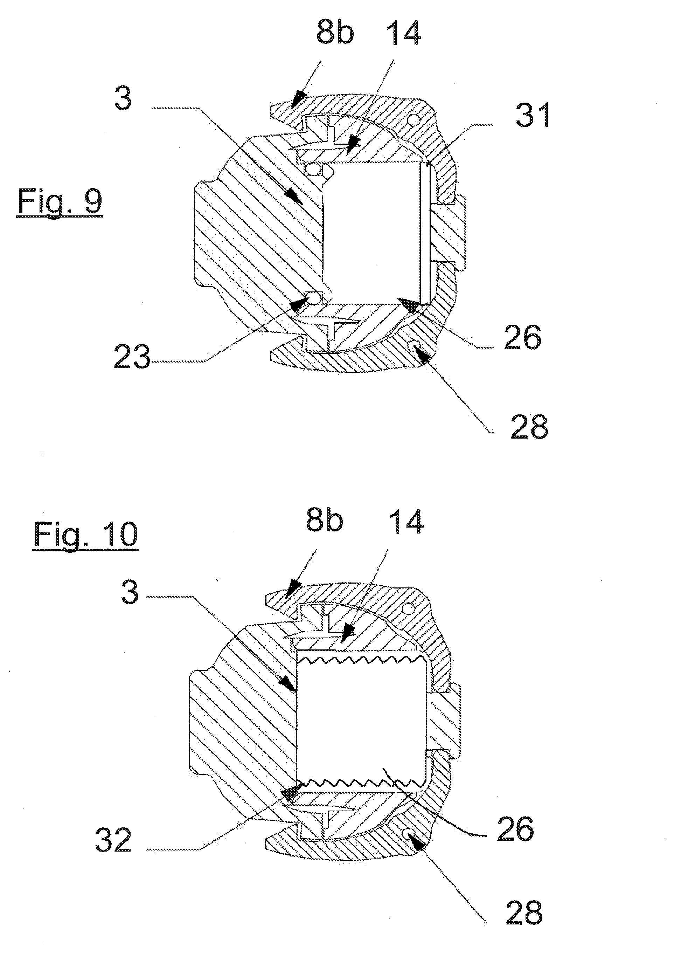

The piston arrangement described above is not essential, and other means are available for releasing the locking members at a desired depth. One exemplary embodiment is schematically shown in Fig. 9, which is equivalent to Fig. 4 of the first embodiment, and where possible like components have retained the same reference numerals. Here, a flexible diaphragm 31 replaces the piston and o-ring arrangement of the first embodiment. In this case, locking members 8a, 8b are connected to the diaphragm 31. Cavity 26 is therefore defined by internal walls of the body and cover 3, and by the internal face of diaphragm 31. The diaphragm may be resilient, and biased into the engaging position shown (i.e. so that the locking members are engaged with cover 3). As with the previous embodiment, when the pod reaches the desired depth, ambient water pressure acts to push down on the diaphragm 31 and thus move the locking members 8a, 8b to disengage with the cover. In an alternative embodiment (not shown), the diaphragm may be biased into the engaging position by separate resilient means such as a spring.

A yet further embodiment is schematically shown in Fig 10, which again shows a view equivalent to Fig. 4 of the first embodiment. Here, bellows 32 are provided on the cover 3, with the locking members 8a, 8b connect to the distal end of the bellows 32. The cavity 26 is formed inside the bellows, and the air trapped inside acts to bias the bellows into the engaging position. An increase in ambient water pressure is operable to deform the bellows, compressing the cavity 26, and thus moving locking members 8a, 8b into disengagement with the cover 3. This embodiment is somewhat different to the previously described embodiments, in that here the cavity 26 remains closed at all times, i.e. water never enters it. For this reason, it is preferable to construct the bellows from a completely water-tight material, such as metal.

The invention has been illustrated as connecting with a form of hook having a barb located below the hook point. Other forms of hook may be accommodated, as long as it is possible to retain the hook portion within cavity 19 as required. For example, if a hook was to be used which did not include a barb, then it is necessary to prevent the hook from sliding out of the cavity. This may be achieved by dimensioning the doors 12a, 12b to grip the hook when closed, so that the hook is prevented from escaping by friction between the hook and doors. Other techniques may be used depending on the hook to be retained.

As a further example, the hook pod described above includes a body and cover connected with a hinged assembly, i.e. via a pivot point. However, the body and cover may be connected by alternative means. For example, the body and cover may be connected by a strip of resilient, flexible material, e.g. plastics material, which is biased towards a relatively unflexed state. When the body and cover are closed, the strip is forced into a relatively flexed configuration, so that when the body and cover are released, they are forced apart by the strip returning to the relatively unflexed state.

## Claims

1. A hook pod (1) for attachment to a longline and for releasably retaining a hook, comprising a body (2) and a cover (3), the body and the cover being relatively movable from a closed configuration to an open configuration, such that in the closed configuration the body and cover are relatively positioned to form a cavity (19) therebetween, the cavity dimensioned to retain a portion of a hook therein in use, preventing access to the hook portion (27), and in the open configuration the body and cover are relatively positioned such that the hook is released from the cavity, the hook pod comprising locking means for releasably locking the body and the cover in the closed configuration,
**characterised in that** the hook pod further comprises
release means for releasing the locking means when the ambient pressure external to the pod reaches a predetermined limit, thus enabling the body and cover to move to the open configuration.

2. A hook pod (1) according to claim 1, wherein the locking means comprises a locking member (8a or 8b) mounted on the body (2), the locking member comprising means for engaging with the cover (3) for locking the body and the cover in the closed configuration.

3. A hook pod (1) according to claim 2, wherein the body (2) comprises a piston (9), the piston being relatively movable with respect to the body, and the member (8a or 8b) being connected to the piston.

4. A hook pod (1) according to claim 3, wherein the body (2) further comprises resilient means (24), the resilient means acting to bias the piston (9) into a closed position, in which the member engages with the cover (3), wherein the resilient means is arranged such that when the piston is caused to move against the bias, the member (8a or 8b) disengages with the cover.

5. A hook pod (1) according to claim 3 or 4, wherein, in the closed configuration, the piston (9), the body (2) and the cover (3) define a substantially waterproof chamber within the hook pod.

6. A hook pod (1) according to either of claims 1 and 2, wherein the body (2) comprises a diaphragm (31), the diaphragm being relatively movable with respect to the body, and the member (8a or 8b) being connected to the diaphragm.

7. A hook pod (1) according to claim 6, wherein the diaphragm (31) is biased into an engaging position, the arrangement being such that when the diaphragm is caused to move against the bias, the member (8a or 8b) disengages with the cover (3).

8. A hook pod (1) according to either of claims 1 and 2, wherein the cover (3) comprises a bellows (32), the bellows being relatively movable with respect to the cover, and the member (8a or 8b) being connected to the bellows.

9. A hook pod (1) according to claim 8, wherein the bellows (32) is biased into an engaging position, the arrangement being such that when the bellows is caused to move against the bias, the member (8a or 8b) disengages with the cover (3).

10. A hook pod (1) according to any preceding claim, wherein the hook pod comprises a light outputting means (20) and a power source for said light outputting means.

11. A hook pod (1) according to claim 10, wherein the light outputting means (20) is activated when the body (2) and cover (3) move to the open configuration.

12. A hook pod (1) according to any preceding claim, wherein the pod comprises means for retaining the hook portion (27) within the cavity (19) when the body (2) and cover (3) are in the closed configuration.

13. A hook pod (1) according to claim 12, wherein the retaining means comprises a pivotally mounted door (12a or 12b) movable between a closed position in which the hook portion (27) cannot enter or leave the cavity (19), and an open position in which the hook portion can enter the cavity.

## Patentansprüche

1. Hakenkapsel (1) zum Anbringen an eine Langleine und zum freigebbaren Aufnehmen eines Hakens, umfassend einen Körper (2) und eine Abdeckung (3), wobei der Körper und die Abdeckung zueinander aus einer geschlossenen Konfiguration in eine geöffnete Konfiguration bewegbar sind, sodass in der geschlossenen Konfiguration der Körper und die Abdeckung derart zueinander positioniert sind, dass sie einen Hohlraum (19) zwischen ihnen ausbilden, wobei der Hohlraum bemessen ist, um im Gebrauch einen Abschnitt eines Hakens darin aufzunehmen und den Zugang zum Hakenabschnitt (27) zu verhindern, und in der geöffneten Konfiguration der Körper und die Abdeckung derart zueinander positioniert sind, dass der Haken aus dem Hohlraum freigegeben wird, wobei die Hakenkapsel Verriegelungsmittel umfasst, um den Körper und die Abdeckung freigebbar in der geschlossenen Konfiguration zu verriegeln,
**dadurch gekennzeichnet, dass** die Hakenkapsel ferner Folgendes umfasst:
Freigabemittel zum Freigeben der Verriegelungsmittel, wenn der Umgebungsdruck außerhalb der Kapsel einen vorgegebenen Grenzwert erreicht, um es so dem Körper und der Abdeckung zu ermöglichen, sich in die geöffnete Konfiguration zu bewegen.

2. Hakenkapsel (1) nach Anspruch 1, wobei die Verriegelungsmittel ein Verriegelungselement (8a oder 8b) umfassen, angebracht auf dem Körper (2), wobei das Verriegelungselement Mittel zum Zusammenwirken mit der Abdeckung (3) zum Verriegeln des Körpers und der Abdeckung in der geschlossenen Konfiguration umfasst.

3. Hakenkapsel (1) nach Anspruch 2, wobei der Körper (2) einen Kolben (9) umfasst, wobei der Kolben bezogen auf den Körper bewegbar ist und das Element (8a oder 8b) mit dem Kolben verbunden ist.

4. Hakenkapsel (1) nach Anspruch 3, wobei der Körper (2) ferner elastische Mittel (24) umfasst, wobei die elastischen Mittel wirken, um den Kolben (9) in eine geschlossene Position vorzuspannen, in der das Element mit der Abdeckung (3) zusammenwirkt, wobei das elastische Mittel derart angeordnet ist, dass das Element (8a oder 8b) den Eingriff mit der Abdeckung löst, wenn bewirkt wird, dass der Kolben gegen die Vorspannung bewegt wird.

5. Hakenkapsel (1) nach Anspruch 3 oder 4, wobei in der geschlossenen Position der Kolben (9), der Körper (2) und die Abdeckung (3) eine im Wesentlichen wasserdichte Kammer innerhalb der Hakenkapsel definieren.

6. Hakenkapsel (1) nach einem der Ansprüche 1 und 2, wobei der Körper (2) ein Diaphragma (31) umfasst, wobei das Diaphragma bezogen auf den Körper bewegbar ist und das Element (8a oder 8b) mit dem Diaphragma verbunden ist.

7. Hakenkapsel (1) nach Anspruch 6, wobei das Diaphragma (31) in eine Eingriffsposition vorgespannt ist, wobei die Anordnung derart gestaltet ist, dass, wenn bewirkt wird, dass sich das Diaphragma gegen die Vorspannung bewegt, das Element (8a oder 8b) sich von der Abdeckung (3) löst.

8. Hakenkapsel (1) nach einem der Ansprüche 1 und 2, wobei die Abdeckung (3) einen Balg (32) umfasst, wobei der Balg bezogen auf die Abdeckung bewegbar ist und das Element (8a oder 8b) mit dem Balg verbunden ist.

9. Hakenkapsel (1) nach Anspruch 8, wobei der Balg (32) in eine Eingriffsposition vorgespannt ist, wobei die Anordnung derart gestaltet ist, dass, wenn bewirkt wird, dass der Balg sich gegen die Vorspannung bewegt, das Element (8a oder 8b) sich von der Abdeckung (3) löst.

10. Hakenkapsel (1) nach einem der vorhergehenden Ansprüche, wobei die Hakenkapsel ein Lichtausgabemittel (20) und eine Stromquelle für das Lichtausgabemittel umfasst.

11. Hakenkapsel (1) nach Anspruch 10, wobei das Lichtausgabemittel (20) aktiviert wird, wenn der Körper (2) und die Abdeckung (3) sich in die geöffnete Konfiguration bewegen.

12. Hakenkapsel (1) nach einem der vorhergehenden Ansprüche, wobei die Kapsel Mittel zum Halten des Hakenabschnitts (27) innerhalb des Hohlraums (19) umfasst, wenn der Körper (2) und die Abdeckung (3) in der geschlossenen Konfiguration sind.

13. Hakenkapsel (1) nach Anspruch 12, wobei das Haltemittel eine schwenkbar befestigte Tür (12a oder 12b) umfasst, die zwischen einer geschlossenen Position, in der der Hakenabschnitt (27) nicht in den Hohlraum (19) eintreten oder daraus austreten kann, und einer geöffneten Position, in der der Hakenabschnitt in den Hohlraum eintreten kann, bewegbar ist.

## Revendications

1. Capsule de protection pour hameçon (1) destinée à être fixée à une palangre et à retenir de façon libérable un hameçon, comprenant un corps (2) et une enveloppe (3), le corps et l'enveloppe pouvant se déplacer relativement d'une configuration fermée à une configuration ouverte, de sorte que, dans la configuration fermée, le corps et l'enveloppe soient relativement positionnés pour former une cavité (19) entre ceux-ci, la cavité étant dimensionnée pour retenir à l'intérieur de celle-ci une partie d'un hameçon en utilisation, empêchant l'accès à la partie d'hameçon (27), et dans la configuration ouverte, le corps et l'enveloppe étant positionnés relativement de sorte que l'hameçon soit libéré de la cavité, la capsule de protection pour hameçon comprenant un moyen de verrouillage destiné à verrouiller de façon libérable le corps et l'enveloppe dans la configuration fermée, **caractérisée en ce que** la capsule de protection pour hameçon comprend en outre un moyen de libération destiné à libérer le moyen de verrouillage lorsque la pression ambiante externe à la capsule de protection atteint une limite prédéterminée, permettant ainsi au corps et à l'enveloppe de se déplacer vers la configuration ouverte.

2. Capsule de protection pour hameçon (1) selon la revendication 1, dans laquelle le moyen de verrouillage comprend un élément de verrouillage (8a ou 8b) monté sur le corps (2), l'élément de verrouillage comprenant un moyen d'enclenchement avec l'enveloppe (3) afin de verrouiller le corps et l'enveloppe dans la configuration fermée.

3. Capsule de protection pour hameçon (1) selon la revendication 2, dans laquelle le corps (2) comprend un piston (9), le piston pouvant se déplacer relativement par rapport au corps, et l'élément (8a ou 8b) étant raccordé au piston.

4. Capsule de protection pour hameçon (1) selon la revendication 3, dans laquelle le corps (2) comprend en outre un moyen résilient (24), le moyen résilient agissant pour solliciter le piston (9) en une position fermée, dans laquelle l'élément est enclenché avec l'enveloppe (3), dans laquelle le moyen résilient est agencé de sorte que, lorsque le piston est amené à se déplacer de façon opposée à la sollicitation, l'élément (8a ou 8b) est désenclenché de l'enveloppe.

5. Capsule de protection pour hameçon (1) selon la revendication 3 ou 4, dans laquelle, dans la configuration fermée, le piston (9), le corps (2) et l'enveloppe (3) définissent une chambre sensiblement étanche à l'eau à l'intérieur de la capsule de protection pour hameçon.

6. Capsule de protection pour hameçon (1) selon l'une ou l'autre des revendications 1 et 2, dans laquelle le corps (2) comprend un diaphragme (31), le diaphragme pouvant se déplacer relativement par rapport au corps, et l'élément (8a ou 8b) étant raccordé au diaphragme.

7. Capsule de protection pour hameçon (1) selon la revendication 6, dans laquelle le diaphragme (31) est sollicité dans une position d'enclenchement, l'agencement étant tel que lorsque le diaphragme est amené à se déplacer de façon opposée à la sollicitation, l'élément (8a ou 8b) est désenclenché de l'enveloppe (3).

8. Capsule de protection pour hameçon (1) selon l'une ou l'autre des revendications 1 et 2, dans laquelle l'enveloppe (3) comprend un soufflet (32), le soufflet pouvant se déplacer relativement par rapport à l'enveloppe, et l'élément (8a ou 8b) étant raccordé au soufflet.

9. Capsule de protection pour hameçon (1) selon la revendication 8, dans laquelle le soufflet (32) est sollicité dans une position d'enclenchement, l'agencement étant tel que lorsque le soufflet est amené à se déplacer de façon opposée à la sollicitation, l'élément (8a ou 8b) est désenclenché de l'enveloppe (3).

10. Capsule de protection pour hameçon (1) selon l'une quelconque des revendications précédentes, dans laquelle la capsule de protection pour hameçon comprend un moyen de production de lumière (20) et une source d'alimentation pour ledit moyen de production de lumière.

11. Capsule de protection pour hameçon (1) selon la revendication 10, dans laquelle le moyen de production de lumière (20) est activé lorsque le corps (2) et l'enveloppe (3) se déplacent vers la configuration ouverte.

12. Capsule de protection pour hameçon (1) selon l'une quelconque des revendications précédentes, dans laquelle la capsule de protection comprend un moyen de retenue de la partie d'hameçon (27) à l'intérieur de la cavité (19) lorsque le corps (2) et l'enveloppe (3) sont dans la configuration fermée.

13. Capsule de protection pour hameçon (1) selon la revendication 12, dans laquelle le moyen de retenue comprend une porte montée avec faculté de pivotement (12a ou 12b) pouvant se déplacer entre une position fermée dans laquelle la partie d'hameçon (27) ne peut pas entrer ou sortir de la cavité (19), et une position ouverte dans laquelle la partie d'hameçon peut entrer dans la cavité.
